# EUROPEAN PATENT SPECIFICATION

(11) **EP 2 034 939 B1**
(45) Date of publication and mention of the grant of the patent: **26.05.2010**
(21) Application number: 07748207.3
(22) Date of filing: 07.06.2007
(51) Int. Cl.: A61F 11/14, H04M 1/05, H04R 1/10

(54) **EAR CUP**
OHRSCHUTZKAPPE
PROTECTEUR D'OREILLES

(30) Priority: 20.06.2006 SE 0601361
(43) Date of publication of application: 18.03.2009
(60) Divisional application: 10156509.1
(73) Proprietor: 3M Svenska Aktiebolag, 191 89 Sollentuna (SE)
(72) Inventor: EMILSSON, Niklas, S-330 17 Rydaholm (SE)
(74) Representative: Wallengren, Yngvar
(86) International application number: PCT/SE2007/000544
(87) International publication number: WO 2008/013487

(56) References cited:
- EP-A- 0 465 971
- US-A- 3 087 028
- US-A- 3 869 584
- US-A- 4 087 653
- US-A- 5 125 032
- US-A- 5 125 032

## Description

### TECHNICAL FIELD

The present invention relates to an ear cup with a bone conduction microphone, and comprising a cup, a sealing ring which is dismountably secured on the cup and which is intended to sealingly abut against the wearer's head around the wearer's ear, and a microphone capsule for cooperation with the wearer's head immediately in front of the wearer's ear.

### BACKGROUND ART

Ear cups or headsets of the above-mentioned type are previously known in the art. In them, the microphone capsule has been disposed interiorly in the sealing ring with the sound-sensitive surface immediately beneath the surface layer with which the sealing ring is provided. In technical terms, this construction functions satisfactorily.

Ear cups or headsets of the type under consideration here are often used for lengthy periods of time. This implies that the interior of the ear cup, and above all the sealing ring, becomes dirty often because of the sweat secreted by the wearer. For this reason, so-called hygienic inserts have been created which int. al. include the sealing ring and which must be replaced at regular intervals if a satisfactory level of hygiene in the ear cup is to be maintained.

In the prior art construction, it has also been necessary, in conjunction with replacement of the hygienic insert, to replace the microphone capsule, since this is disposed interiorly in the material of the sealing ring. This entails overly high costs in connection with the replacement of a hygienic insert.

EP 0 465 971 describes a housing, containing a transceiver, a speaker, battery, and, optionally, also a bone conduction microphone mounted therein. The housing, in turn, may be mounted to a flame retardant ear flap of a helmet.

### PROBLEM STRUCTURE

The present invention has for its object to obviate the drawbacks inherent in the prior art technology. In particular, the present invention has for its object to realise an ear cup or headset with a bone conduction microphone where the bone conduction microphone does not need to be replaced in connection with replacement of the hygienic insert. Further, the present invention has for its object to realise an ear cup or headset which, despite the employment of a bone conduction microphone, is simple in manufacture and which makes for simple replacement of the hygienic insert.

### SOLUTION

The objects forming the basis of the present invention will be attained if the ear cup or headset mentioned by way of introduction is characterised in that the microphone capsule is disposed in a retainer body which has an anchorage portion for anchorage interiorly in the ear cup, and that the retainer body has a position of use where it is located between the sealing ring and the wearer's head, and the retainer body is also wholly or partly pressed into the sealing ring when the ear cup is worn pressed against the head of the wearer.

### BRIEF DESCRIPTION OF THE ACCOMPANYING DRAWINGS

The present invention will now be described in greater detail hereinbelow with reference to the accompanying Drawings. In the accompanying Drawings:
- Fig. 1: shows an empty ear cup without sealing ring, but with a retainer body with anchorage portion mounted therein;
- Fig. 2: shows the ear cup according to Fig. 1, now provided with fittings and sealing ring, with the retainer body in a position of use; and
- Fig. 3: is a cross section through the sealing ring taken along the section marking in Fig. 2.

### DESCRIPTION OF PREFERRED EMBODIMENT

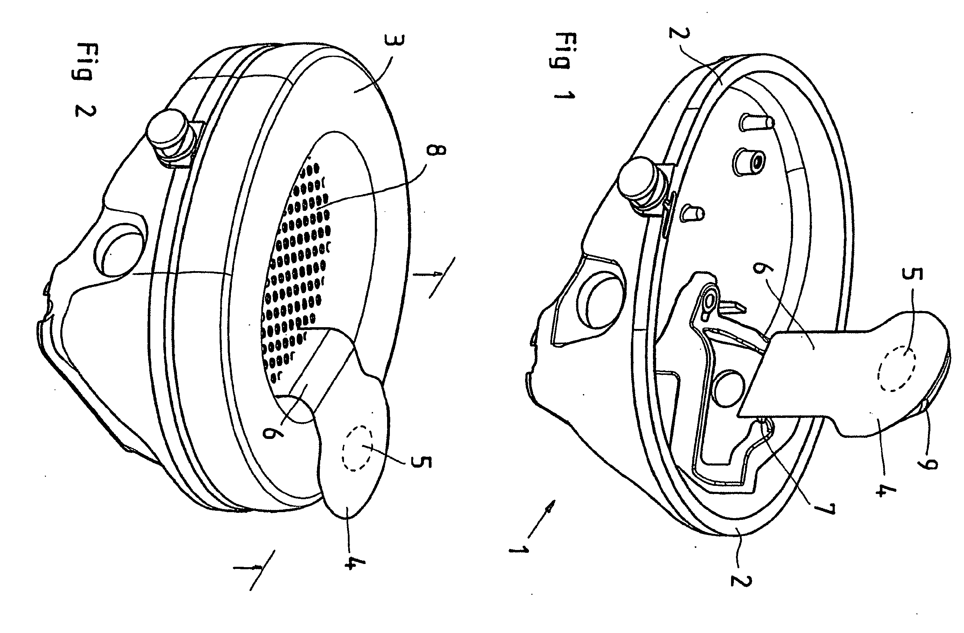

Fig. 1 shows an empty ear cup 1 included in a complete ear cup unit or headset. The ear cup 1 is as a rule manufactured from plastic and has interiorly a number of parts for the securing of electronics, absorbents and the like. The ear cup 1 has an edge 2 which is designed for securing a sealing ring 3 (see Fig. 2). Thus far, the ear cup 1 as described in the foregoing is to be considered as fully conventional. This entails, on the one hand, that the sealing ring may readily be replaced in conjunction with the replacement of hygienic insert and, on the other hand, that the sealing ring 3 consists of a core of elastically yieldable material, as a rule a foamed material, and an outer casing or envelope which encloses the elastic foamed material. On use of the ear cup, this is held pressed against the head of the wearer and around the wearer's ears, so that satisfactory sealing is obtained between the sealing ring and the wearer's head.

It is also conceivable that the sealing ring 3 includes a liquid or a gel.

It will be apparent from Fig. 1 that, interiorly in the ear cup 1, there is secured a retainer body 4 for a microphone capsule 5 intimated by broken lines. The retainer body 4 has an anchorage portion 6 which, at its lower end in Fig. 1, has an angled projection 7 directed away from the observer of the Drawing and by means of which the retainer body and the anchorage portion are secured interiorly in the ear cup 1.

Preferably, the retainer body 4, the anchorage portion 6 and the projection 7 are of one piece manufacture from an elastically flexible material, for example rubber. The anchorage portion 6 is of a thickness which makes it readily flexible from the straight upright position illustrated in Fig.1 to the position of use illustrated in Fig. 2 where the one side of the retainer body 4 abuts against the sealing ring and its other side abuts against the wearer's head.

Alternatively, the anchorage portion 6 may, already at manufacture, be of a configuration which entails that the retainer body 4 assumes its position of use and thus abuts against the sealing ring 3, hence as shown in Fig. 2. On replacement of hygienic insert, the anchorage portion 6 is, in this alternative, bent to the position illustrated in Fig. 1.

It will readily be perceived that, with the retainer body 4 and the anchorage portion 6 in the position illustrated in Fig. 1, the sealing ring 3 may easily be replaced, if required. In addition, there is ready access to those parts as are disposed interiorly in the ear cup, for example the absorbent 8 illustrated in Fig. 2. The hygienic insert mentioned by way of introduction includes at least the sealing ring 3 and preferably also the absorbent 8.

It should be emphasised that, with the practical application of the present invention, it is sufficient if the sealing ring 3 is of economical, easily replaceable standard type.

The side of the retainer body 4 and anchorage portion 6 facing towards the observer of Fig. 1 is, in the position according to Fig.1, substantially planar. This implies that, in the position of use according to Fig. 2, the retainer body 4 displays a substantially planar surface for abutment and sealing against the wearer's head immediately in front of the wearer's ear. However, in this position of use, the anchorage portion 6 is bent, as is clearly apparent from Fig. 2.

It will be at least partly apparent from Fig. 1 that the retainer body 4 has, in this Figure, an arched rear surface 9 which, in the position of use according to Fig. 2, is intended to abut against the sealing ring 3 and be wholly or partly impressed therein under the action of the forces that are generated when the complete ear cup or headset is worn on the wearer's head and where, for instance, it is held in position with the aid of a crown strap or the like. Other alternatives are also conceivable. Thus, the ear cups may have a neck strap or be secured in or on a helmet. How the ear cups are held against the head of the wearer is immaterial to the present invention as long as the correct abutment pressure and correct positioning can be ensured.

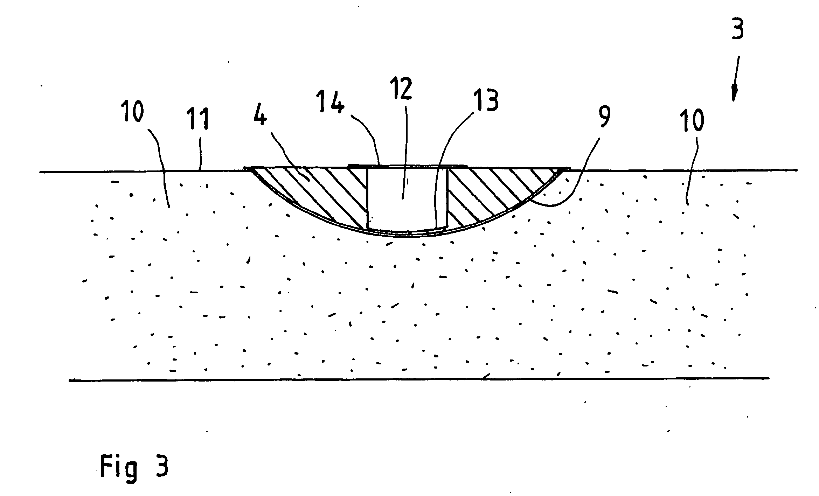

It will be clearly apparent from Fig. 3 that the arched surface 9 of the retainer body 4 which is the rear surface in Fig.1 is wholly impressed in the sealing ring 3. This entails that, in the transitional zone between the retainer body 4 and the sealing ring 3, a completely satisfactory can be attained so that the sound damping effect of the ear cup is thereby not jeopardised.

In a traditional manner, the sealing ring 3 has a filling of an elastically deformable foamed material 10 and a foil-thin outer casing or envelope 11 which is readily flexible.

The retainer body 4 has a recess 12 in which the microphone capsule 5 is disposed. The recess 12 has a bottom wall 13 which, in the position of use, is turned to face towards the sealing ring 3 and which consists of a thin, readily flexible material, as a rule rubber, since the retainer body 4 can suitably be manufactured from this material in its entirety. The recess 12 and the microphone capsule 5 are, in a direction in towards the user's head, covered by a thin partition 14 which consists of a readily flexible, possibly elastic material. The depth of the recess 12 is adapted in such a manner that the microphone capsule exactly has room between the partition 14 and the bottom wall 13. This implies that, when the retainer body 4 is impressed into the sealing 3, as shown in Fig. 3, forces created by an elastic compression of the foamed material 10 of the sealing ring 3 will, via the bottom wall 13, press the microphone capsule against the partition 14 and this latter against the user's head. As a result, a good sound conduction will be attained from the user's head via the partition to the microphone capsule 5.

According to the present invention, the distance between the partition 14 and the bottom wall 13 may be greater than the extent of the microphone capsule in the same direction. In this alternative, use is made in the recess 12 of a spacer element which fills out the remaining space in the recess 12. This spacer element guarantees that the microphone capsule will have the correct abutment pressure or conduct the sound from the user's head to the microphone capsule. The spacer element may consist of felt, a foamed material or rubber.

It should be emphasised that the microphone capsule 5 is completely separate and discrete from hard or rigid components in the ear cup and is only affected by the above-mentioned forces created by the elasticity of the foamed material.

In order to realise good sealing between the retainer body 4 and the sealing ring 3, it is important that the arched, rear surface 9 of the retainer body in a direction out towards the periphery of the retainer body gradually merges into a thin edge portion which affords fully satisfactory sealing against the sealing ring 3 when the retainer body is impressed therein. In other words, the retainer body 4 has a configuration which implies that it is attenuated outwards in a direction towards the periphery so as not to form any stepped transition in the joint to the sealing ring 3.

It will be apparent from Fig. 3 that the recess 12, and thereby also the microphone capsule, is disposed in a central region of the retainer body 4, i.e. in that area where the thickness of the retainer body is at its greatest.

## Claims

1. An ear cup with a bone conduction microphone, and comprising: a cup (1), a sealing ring (3) which is dismountably secured on the cup and which is intended to sealingly abut against the wearer's head around the wearer's ear, and a microphone capsule (5) for cooperation with the wearer's head immediately in front of the wearer's ear, **characterised in that** the microphone capsule (5) is disposed in a retainer body (4) which has an anchorage portion (6) for anchorage interiorly in the ear cup (1), and that the retainer body adapted to have a position of use where it is located between the sealing ring (3) and the wearer's head, and wherein the retainer body is also adapted to be wholly or partly pressed into the sealing ring when the ear cup is worn pressed against the head of the wearer.

2. The ear cup as claimed in Claim 1, **characterised in that** the retainer body (4) has a recess (12) in which the microphone capsule (5) is disposed, and that the microphone capsule and the side of the recess facing towards the wearer in the position of use are covered by a foil-thin, flexible partition (14).

3. The ear cup as claimed in Claim 1 or 2, **characterised in that** the retainer body (4) has a recess (12) in which the microphone capsule (5) is disposed, and that the recess has a bottom wall (13) which, in the position of use, is turned to face towards the sealing ring (3) and which consists of a foil-thin, flexible material.

4. The ear cup as claimed in Claims 2 and 3, **characterised in that** the distance between the inside of the partition (14) and the inside of the bottom wall (13) substantially corresponds to the extent of the microphone capsule (5) in the same direction.

5. The ear cup as claimed in any of Claims 1 to 4, **characterised in that** the retainer body (4) has its surface facing towards the sealing ring (3), in the position of use, arched with a central portion (9) outwardly bulging in the sealing ring and thin peripheral portions.

6. The ear cup as claimed in Claim 5, **characterised in that** the recess (12) with the microphone capsule (5) is disposed centrally in the outwardly bulging central portion (9).

7. The ear cup as claimed in any of Claims 1 to 4, **characterised in that** the microphone capsule (5) is, in the position of use, separate and discrete from all hard or rigid parts of the cup (1) and that it is pressed against the wearer's head under the action of forces created by elastic deformation of the material (10) of the sealing ring (3).

## Patentansprüche

1. Ohrbecher mit einem Knochenleitungsmikrofon, und umfassend: einen Becher (1), einen Abdichtungsring (3), der abnehmbar an dem Becher gesichert ist und zur dichtenden Anlage am Kopf des Benutzers um das Ohr des Benutzers herum gedacht ist, und eine Mikrofonkapsel (5) zur Zusammenwirkung mit dem Kopf des Benutzers direkt vor dem Ohr des Benutzers, **dadurch gekennzeichnet, dass** die Mikrofonkapsel (5) in einem Halterkörper (4) angeordnet ist, der einen Verankerungsabschnitt (6) zur Innenverankerung in dem Ohrbecher (1) aufweist, und dass der Halterkörper dazu ausgelegt ist, eine Gebrauchsposition aufzuweisen, bei der er zwischen dem Abdichtungsring (3) und dem Kopf des Benutzers liegt, und wobei der Halterkörper auch dazu ausgelegt ist, ganz oder zum Teil in den Abdichtungsring hineingedrückt zu werden, wenn der Ohrbecher gegen den Kopf des Benutzers gedrückt getragen wird.

2. Ohrbecher nach Anspruch 1, **dadurch gekennzeichnet, dass** der Halterkörper (4) eine Ausnehmung (12) hat, in der die Mikrofonkapsel (5) angeordnet ist, und dass die Mikrofonkapsel und die zum Benutzer hin weisende Seite der Ausnehmung in der Gebrauchsposition von einer foliendünnen, flexiblen Trennwand (14) bedeckt sind.

3. Ohrbecher nach Anspruch 1 oder 2, **dadurch gekennzeichnet, dass** der Halterkörper (4) eine Ausnehmung (12) hat, in der die Mikrofonkapsel (5) angeordnet ist, und dass die Ausnehmung eine Bodenwand (13) aufweist, die in der Gebrauchsposition so gedreht ist, dass sie zu dem Abdichtungsring (3) hin weist, und aus einem foliendünnen, flexiblen Material besteht.

4. Ohrbecher nach Anspruch 2 und 3, **dadurch gekennzeichnet, dass** der Abstand zwischen der Innenseite der Trennwand (14) und der Innenseite der Bodenwand (13) im Wesentlichen der Ausdehnung der Mikrofonkapsel (5) in der gleichen Richtung entspricht.

5. Ohrbecher nach einem der Ansprüche 1 bis 4, **dadurch gekennzeichnet, dass** die zum Abdichtungsring (3) hin weisende Fläche des Halterkörpers (4) in der Gebrauchsposition gebogen ist, mit einem Mittelabschnitt (9), der sich nach Außen in den Abdichtungsring wölbt, und dünnen Umfangsabschnitten.

6. Ohrbecher nach Anspruch 5, **dadurch gekennzeichnet, dass** die Ausnehmung (12) mit der Mikrofonkapsel (5) zentral im nach außen gewölbten Mittelabschnitt (9) angeordnet ist.

7. Ohrbecher nach einem der Ansprüche 1 bis 4, **dadurch gekennzeichnet, dass** die Mikrofonkapsel (5) in der Gebrauchsposition separat und diskret von allen harten oder steifen Teilen des Bechers (1) ist und dass sie unter Einwirkung von Kräften, die durch elastische Verformung des Materials (10) des Abdichtungsrings (3) erzeugt werden, gegen den Kopf des Benutzers gedrückt wird.

## Revendications

1. Protecteur d'oreilles équipé d'un ostéophone, et comprenant une coquille (1), un anneau d'étanchéité (3) qui est fixé de façon démontable sur la coquille et qui est destiné à s'appliquer de façon étanche contre la tête de l'utilisateur autour de l'oreille de l'utilisateur, et une pastille de microphone (5) destinée à s'adapter sur la tête de l'utilisateur immédiatement en face de l'oreille de l'utilisateur, **caractérisé en ce que** la pastille de microphone (5) est disposée dans un corps de retenue (4) qui possède une partie d'ancrage (6) pour permettre une fixation à l'intérieur du protecteur d'oreilles (1), et **en ce que** le corps de retenue est adapté pour présenter une position d'utilisation dans laquelle il est situé entre l'anneau d'étanchéité (3) et la tête de l'utilisateur, et dans lequel le corps de retenue est également adapté pour être totalement ou partiellement pressé dans l'anneau d'étanchéité lorsque le protecteur d'oreilles est porté pressé contre la tête de l'utilisateur.

2. Protecteur d'oreilles selon la revendication 1, **caractérisé en ce que** le corps de retenue (4) comporte un évidement (12) dans lequel la pastille de microphone (5) est disposée, et **en ce que** la pastille de microphone et le côté de l'évidement qui fait face à l'utilisateur dans la position d'utilisation sont couverts par une cloison flexible à feuille mince (14).

3. Protecteur d'oreilles selon la revendication 1 ou 2, **caractérisé en ce que** le corps de retenue (4) comporte un évidement (12) dans lequel la pastille de microphone (5) est disposée, et **en ce que** l'évidement présente une paroi de fond (13) qui, dans la position d'utilisation, est tournée pour faire face à l'anneau d'étanchéité (3) et qui est constituée d'une matière flexible à feuille mince.

4. Protecteur d'oreilles selon les revendications 2 et 3, **caractérisé en ce que** la distance entre l'intérieur de la cloison (14) et l'intérieur de la paroi de fond (13) correspond sensiblement à l'étendue de la pastille de microphone (5) dans la même direction.

5. Protecteur d'oreilles selon l'une quelconque des revendications 1 à 4, **caractérisé en ce que** le corps de retenue (4) a sa surface faisant face à l'anneau d'étanchéité (3), dans la position d'utilisation, qui est arquée avec une partie centrale (9) bombée vers l'extérieur dans l'anneau d'étanchéité et des parties périphériques minces.

6. Protecteur d'oreilles selon la revendication 5, **caractérisé en ce que** l'évidement (12) pourvu de la pastille de microphone (5) est disposé de façon centrale dans la partie centrale bombée vers l'extérieur (9).

7. Protecteur d'oreilles selon l'une quelconque des revendications 1 à 4, **caractérisé en ce que** la pastille de microphone (5), dans la position d'utilisation, est séparée et distincte de toutes les parties dures ou rigides de la coquille (1), et **en ce qu'**elle est pressée contre la tête de l'utilisateur sous l'action de forces créées par une déformation élastique de la matière (10) de l'anneau d'étanchéité (3).
